# EUROPÄISCHE PATENTSCHRIFT

(11) **EP 2 012 218 B1**
(45) Veröffentlichungstag und Bekanntmachung des Hinweises auf die Patenterteilung: **11.10.2017**
(21) Anmeldenummer: 08103835.8
(22) Anmeldetag: 06.05.2008
(51) Int. Cl.: G06F 3/038, G06F 3/01, G10L 17/22, G10L 15/183, G10L 15/22, H04M 3/493

(54) **Verfahren zur Beeinflussung der Interpretation multimodaler Eingaben**
Method for influencing the interpretation of multimodal inputs
Procédé pour influencer l'interprétation d'entrées multimodales

(30) Priorität: 22.05.2007 DE 102007024110
(43) Veröffentlichungstag der Anmeldung: 07.01.2009
(73) Patentinhaber: Deutsche Telekom AG, 53113 Bonn (DE)
(72) Erfinder: Dr. Englert, Roman, 53913, Swisttal (DE); Scheerbarth, Thomas, Berlin 12555 (DE); Glass, Gregor, 12203, Berlin (DE); Runge, Fred, 15838, Wünsdorf (DE); Kliche, Ingmar, 10318, Berlin (DE)
(74) Vertreter: 2K Patentanwälte Blasberg Kewitz & Reichel

(56) Entgegenhaltungen:
- EP-A2- 1 705 554
- US-A- 5 664 058
- LIZHONG WU ET AL: "Multimodal Integration-A Statistical View", IEEE TRANSACTIONS ON MULTIMEDIA, IEEE SERVICE CENTER, PISCATAWAY, NJ, US, Bd. 1, Nr. 4, 1. Dezember 1999 (1999-12-01), XP011036303, ISSN: 1520-9210

## Beschreibung

Die Erfindung betrifft ein Verfahren und eine Vorrichtung, die es ermöglichen, die semantische Interpretation der Eingaben in einzelnen und/oder kombinierten Modi für ein multimodales Dialogsystem durch den Nutzer eines Telekommunikationsendgerätes zu definieren.

### Gebiet der Erfindung:

Bekannt sind multimodale Dialogsysteme (siehe http://www.w3.org/TR/mmi-framework/) für die eine Vielzahl von multimodalen Eingabemöglichkeiten, wie Sprache, Tastatur, Griffel, Touchscreen, GPS vorgesehen sind. Für jeden dieser Eingabemodi, sind in einem derartigen System die Bedeutungen der Nutzereingaben zu definieren. Gleiche Eingaben können dabei für unterschiedliche Anwendungen sowohl gleiche, als auch unterschiedliche Bedeutungen haben. Im Allgemeinen ähnlich für unterschiedliche Anwendungen sind z. B. für die Eingabemodi Sprache und/oder Tastatur/Maus/Griffel Eingabekonzepte für Zustimmung oder Ablehnung zu einer Systemausgabe definiert. Für die Sprache sind das in der deutschen Sprache z. B. die Wörter "Ja" bzw. "Nein" oder entsprechende Synonyme oder komplexere z. B. in einer Spracherkennungsgrammatik zu definierende Ausdrucksweisen. Sollen jedoch die Bedeutung z. B. von Bewegungen des Endgerätes durch den Nutzer oder Eingaben interpretiert werden, die verschiedene Modi kombiniert anwenden, so existieren dazu kaum allgemein anerkannte Muster (z. B. Bewegungsmuster) für unterschiedliche Eingabekonzepte. Selbst, wenn Nutzer z. B. durch entsprechende Bildschirmausgaben zu bestimmten Bewegungen mit dem Endgerät für entsprechend zugeordnete Eingabekonzepte aufgefordert werden, können aufgrund unterschiedlicher, individueller Interpretationen der Aufforderungen durch die Nutzer individuelle Abweichungen in der Gestik entstehen. Eine Aufgabe besteht also darin, im Rahmen eines multimodalen Dialogsystems Möglichkeiten zu finden, entweder vorhandene, durchschnittliche Reaktionen beschreibende administrativ eingestellte Eingabemodelle (z. B. Bewegungsmodelle) der nutzerindividuellen Interpretation anzupassen oder nutzerindividuelle neue Eingabemodelle für vorgesehene Nutzeraktionen zu definieren, ohne dass eine Vielzahl von Nutzerreaktionen (z. B. Endgerätebewegungen und/oder deren Kombinationen mit Reaktionen in anderen Modi) und entsprechende Modelle durch den System- und/oder Anwendungsentwickler vorhergesehen werden können.

Aus dem Stand der Technik sind im Allgemeinen bekannt der Aufbau von Dialogsystemen, die der sprachlichen und analog der multimodalen Interaktion mit mindestens einem Nutzer dienen (siehe auch http://www.w3.org/TR/2000/WD-voice-intro-20001204/). Auch wird international versucht, Dialogsysteme an bekannte Eigenschaften einzelner Nutzer zu adaptieren (siehe Hjalmarsson, A., "Adaptive Spoken Dialogue Systems", Centre for Speech Technology, KTH, Jan. 2005). In Quek, F. et al., "Multimodal Human Discourse: Gesture and Speech", ACM Transactions on Computer-Human Interaction, Vol. 9, No.3, September 2002 werden Versuche beschrieben, um aus Gesten die Struktur von Diskursen abzuleiten.

Speziell für sprecherabhängige Spracherkennungssysteme (z. B. Diktiersysteme) sind zum Training der akustischen Modelle für einzelne Wörter und/oder Wortfolgen Methoden bekannt, bei denen der Nutzer des Systems die für das Training vorgesehenen Wörter, Wortfolgen und/oder Texte auf einem Bildschirm angezeigt bekommt und diese, ggf. mehrfach, über ein Mikrophon nachsprechen muss, d.h. die später zu erkennenden Sprachmodelle werden dabei durch Eingaben über das gleiche Medium (Sprache) trainiert, wobei die Bedeutung der zu trainierenden Äußerung vorgegeben ist und ggf. über den Bildschirm zur Anzeige gebracht oder über ein Sprachausgabesystem ausgegeben wird.

Inzwischen sind ebenfalls Endgeräte bekannt, welche mit Sensoren zur Bestimmung der Lage bzw. Orientierung und mit Bewegungssensoren ausgestattet sind, welche z. B. die Eingabe von Informationen durch den Nutzer über Bewegungen ermöglichen (siehe JP2001272413; JP2002169645; JP2003111142). In EP1617629A1 werden mobile Endgeräte mit externen Bewegungssensoren ausgestattet. Aus der EP 1 705 554 A2 ist ein System bekannt bei dem dem Benutzer eine Liste mit N-Erkennungen vorgelegt wird, aus der der Benutzer, dann eine Auswahl treffen muss. Aus Multimodal Integration - A Statistical View IEEE Transcations on Multimedia Vol 1 No 4 Decembe 1999, beschreibt ein multimodales System, das entsprechende Lernschritte erlaubt.

Die Erfassung von Endgerätebewegungen ist damit zwar möglich, jedoch wird die Zuweisung der Bedeutung bestimmter Bewegungen meist anwendungsbezogen fest vorgegeben, was der automatischen Interpretation einer natürlichen, individuell ausgeprägten Gestik enge Grenzen setzt.

### Überblick über die Erfindung:

Die Aufgabe der vorliegenden Erfindung ist es, ein Verfahren und entsprechende Vorrichtung bereitzustellen, die es erlauben, dass die semantische Interpretation der Eingaben in einzelnen und/oder kombinierten Modi für ein multimodales Dialogsystem durch den Nutzer eines Telekommunikationsendgerätes definierbar ist.

Gelöst wird diese Aufgabe durch ein Verfahren und eine Vorrichtung mit den Merkmalen der unabhängigen Ansprüche.

Zur Realisierung der Aufgabenstellung wird ein multimodales Dialogsystem zusätzlich mit Mitteln ausgestattet, die es erlauben, dass aus bedeutungstragenden und in den Eingabemodellen schon definierten Nutzerreaktionen Modelle für andere Medien generiert werden, deren Bedeutung durch die schon definierten, ggf. administrativ und/oder Anwendungsentwickler generierten Eingabemodelle beschrieben werden. Dies kann z. B. durch Einsatz von mindestens einer Zusatzanwendung oder einen Teil einer anderen Dialoganwendung geschehen, welche rückkoppelnd nach Erkennung eines bestimmten Bewegungsmusters den Nutzer zur Definition der Bedeutung dieses Bewegungsmusters über einen anderen Eingabemodus (z. B. Sprache und/oder Griffel und/oder Tastatur und/oder Touchscreen und/oder Kamera(Gestik) und/oder Bewegung) auffordert, für den die Bedeutungen bestimmter Eingabemodelle schon definiert sind. Dabei können einem Eingabemodell oder einer Kombination von Eingabemodellen zur gleichen Nutzerreaktion in Abhängigkeit von der jeweiligen Zielanwendung und/oder Kontext unterschiedliche Bedeutungen zugewiesen werden.

Im Einzelnen handelt es sich um ein Verfahren zur Benutzer-individuellen Definition der Interpretation von Eingaben in ein multimodales, mehrere Eingabegeräten umfassendes, Dialogsysteme eines Telekommunikationsendgerätes. Hierbei kann es sich vorzugsweise um einen PDA, ein mobiles Telefon oder ein Smartphone handeln.

Dieses weist einen Speicherbereich auf, der eine Datenbank verwaltet, in der Eingabemodelle für ein Eingabegeräten oder Eingabemodelle für eine Kombination von Eingabegeräten abgelegt sind. Die Eingabegeräte umfassen Kontexterkenner, welcher z.B. mit Hilfe eines Positiönierungssystems den örtlichen Kontext oder z.B. über bestimmte Bewegungsmuster die Umgebungssituation (z.B. Erschütterungen im Fahrzeug) bestimmen kann; Griffel,-Touchscreen-, Tasten-, Tastatureingabe; Bewegungs-, Neigungs-, Lageerkennung; Sprechererkennung; Sprecherklassifizierung; Spracherkennung. Da der Kontexterkenner sinnvollerweise auch interpretativ durch Auswertung anderer Eingaben wirksam werden kann, kann er ebenfalls auch als Bestandteil eines Auswertungs- und Interpretationsmoduls betrachtet werden.

Falls nun eine Eingabe von einer Anwendung erwartet wird, die einem Telekommunikationsendgerät zugeordnet ist, wird entsprechend des Eingabegerätes und dem ihm zugeordneten Eingabemodell ein Zuordnungsversuch der Eingabe zu einem oder mehreren Eingabemodellen versucht. Für den Fall, das die Eingabe einem Eingabemodell zugeordnet werden kann, wird nun die Bedeutung der Eingabe in Bezug zu der Anwendung ermittelt und einem Interaktions-/Applikations- Manager übergeben. Dieser reicht nun die Eingabe an die Applikation weiter.

Falls hingegen kein Eingabemodell gefunden wird oder eine ausreichend sichere Zuordnung zu einem Eingabemodell nicht erfolgen kann, so schaltet das Verfahren um auf ein alternatives Eingabeverfahren oder Eingabegerät dessen Eingabemodell ausreichend definiert ist und fordert danach den Benutzer zur erneuten Eingabe über das alternative Eingabeverfahren oder das alternative Eingabegerät auf. Die Auswahl des alternativen Eingabeverfahrens oder alternativen Ausgabegerätes, bezieht sich auch auf das Eingabemodell, das für die alternative Eingabe in Bezug zu der gerade laufenden Anwendung vorhanden ist. So kann es sein, dass manches Eingabegerät für eine Anwendung besser geeignet ist als ein anderes, da das Eingabemodell in Bezug zu den Anwendungen unterschiedlich definiert ist. So kann es ebenfalls vorkommen, dass die gleiche Eingabe bei unterschiedlichen Anwendungen eine unterschiedliche Bedeutung hat.

Die erneute Eingabe über das alternative Eingabeverfahren oder das Eingabegerät ersetzt die ursprüngliche Eingabe und es wird so die Bedeutung der Eingabe anhand dessen Eingabemodells bestimmt. Die so bestimmte Bedeutung wird an die Anwendung weitergeleitet, wobei der ursprünglichen Eingabe, die gepuffert wurde, die so bestimmte Bedeutung zugeordnet wird, um diese dann im Eingabemodell zu speichern. In einer bevorzugten Ausführungsform erfolgt in einem interaktiven Dialog eine Abfrage, ob die Eingabe auch tatsächlich im Eingabemodell gespeichert werden soll. Ein solches Training wird interaktives Training genannt. Hierbei wird sichergestellt, dass lediglich gewollte Trainingsergebnisse in das Modell übernommen werden. Durch den Dialog kann vermieden werden, dass ein nicht gewünschtes Ergebnis gespeichert wird.
Im Gegensatz dazu gibt es ein explizites Training, bei dem der Benutzer vorzugsweise mehrfach aufgefordert wird, die Eingabe zu einer z.B. im Sprachmodell vorgegebenen Bedeutung einer Spracheingabe vorzunehmen, wobei die Bestätigung durch ein alternatives Eingabeverfahren oder Eingabegerät, dessen Eingabemodell ausreichend definiert ist, erfolgt.

In einer bevorzugten Ausführungsform kann es vorkommen, das bestimmte Eingabemodelle Kombinationen von Eingaben auf unterschiedlichen Geräten zugelassen. So können sowohl parallele Eingaben als auch Eingabefolgen zulässig sind.

Die Eingabefolgen werden durch Vektordefinitionen synchronisiert. Hierbei sind die Eingabefolgen vorzugsweise zeitdiskret.

Die Nutzung von Modi mit vorhandenen Bedeutungsdefinitionen der Eingaben in entsprechenden Eingabemodellen kann damit zur Definition der Bedeutung von Eingaben genutzt werden, für die noch keine Bedeutungsdefinitionen vorliegen. Durch die Bildung kombinierter Eingabemodelle und/oder die Ermittlung des Eingabetyps wird die Wahrscheinlichkeit einer erfolgreichen Auswertung mültimodaler Nutzereingaben erhöht.

Das implizite Training während geführter Dialoge im Primärmodus schafft mit der Bildung kombinierter Eingabemodelle die Grundlage für einen Übergang zu freien Dialogen des Nutzers mit dem System.

### Figurenbeschreibung:

Im Folgenden werden die Figuren kurz beschrieben. Sie dienen zum besseren Verständnis der Erfindung und der Ausführungsformen.
Fig. 1 zeigt die Struktur eines Dialogsystems, mit multimodaler Beeinflussung der Bedeutungsinterpretation der Modi,
Fig. 2 zeigt ein Beispiel für unimodale Beeinflussung der Bedeutungsinterpretation der Modi.

### Detaillierte Beschreibung:

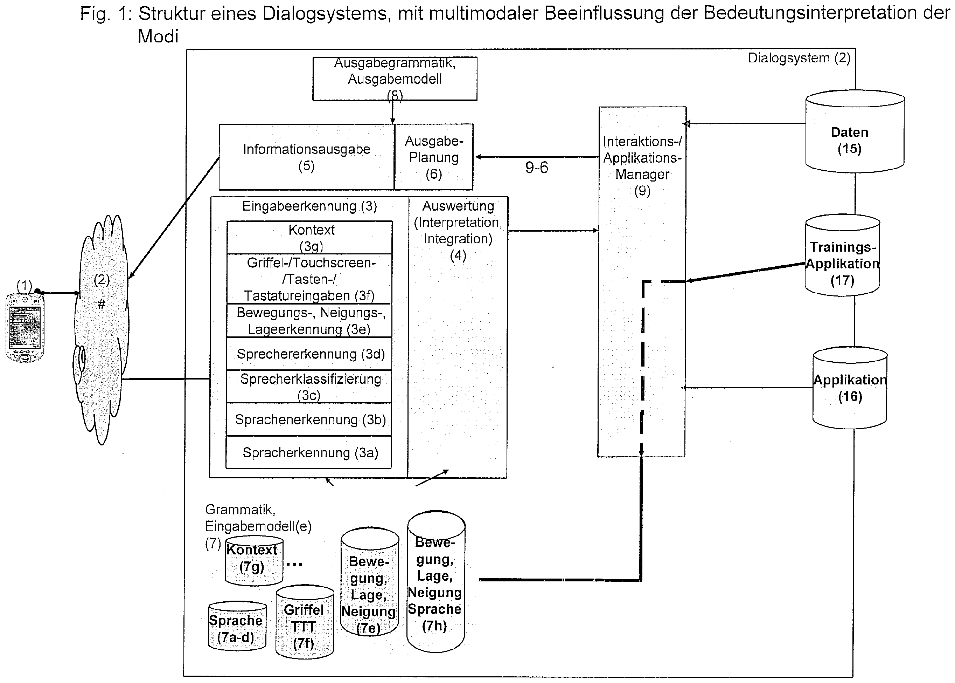

Aus der Figur 1 ist das Endgerät 1 ersichtlich, das über ein Netzwerk 2 zur Daten-, Sprach- und/oder zu Übertragung von multimodale Ein- und Ausgaben dient.

Ein Dialogsystem 2 umfasst eine Eingabeerkennung 3, die weitere Untermodule aufweist, wie Spracherkennung, zur Erkennung von DTMF-Tönen 3a, Sprachenerkennung (language identification, language detection) 3b, Sprachklassifizierung (Sprachbasierte Klassifizierung) 3c, Sprechererkennung (Sprecherverifizierung und/oder Sprecheridentifizierung) 3d, Emotionserkennung 3e, Ermittlung der Anschluss-/Endgerätekennung 3f, Erkennung anderer multimodaler Eingaben (Griffel, Tastatur, Kamera, Touchscreen, ...) 3g

Ein Auswertungs-/Interpretationsmodul 4 dient zur kombinierten Interpretation der Eingaben unter Nutzung der Eingabemodelle bzw. Grammatiken 7. Hier wird mit deren Hilfe letztlich die Bedeutung einzelner oder kombinierter multimodaler Eingaben ermittelt und weitergereicht.

Ein Informationsausgabemodul 5 dient zur Ausgabe von aufgezeichnete Sprache, Sprachsynthese, Displayanzeigen, Audiosignale, Gerätevibration etc.

Die Ausgabeplanung 6 definiert anhand von Regeln, die in Ausgabemodellen (8) festgelegt sind, die Reihenfolge und die Art der Modi zur Ausgabe von Informationsinhalten.

Die Eingabemodelle 7 speichern, die Grammatik und den Kontext der einzelnen Modelle der Eingabemodule.

Ausgabegrammatik, Ausgabemodell 8 bestimmt das Verhalten der Geräte und Anwendungen auf eine Eingabe.

Das Interaktions-/Applikationsmanagement 9 führt letzlich die Applikation gemäß der Vorgaben der Applikationsdaten (16) aus. Es stellt eine Zwischenschicht zwischen Eingabegeräten und Anwendungen dar, die die Grammatiken bzw. die Eingabemodelle 7 miteinander verknüpfen.

Die Anwendungsdaten 15 werden von den Dialoganwendungen 16 genutzt und haben somit Einfluss auf die Ausführung der Anwendungen.
Die Trainingsanwendung 17 ist ebenfalls die durch den Applikationsmanager interpretierbare Beschreibung einer Applikation, die spezielle Eingabemodelle trainiert.

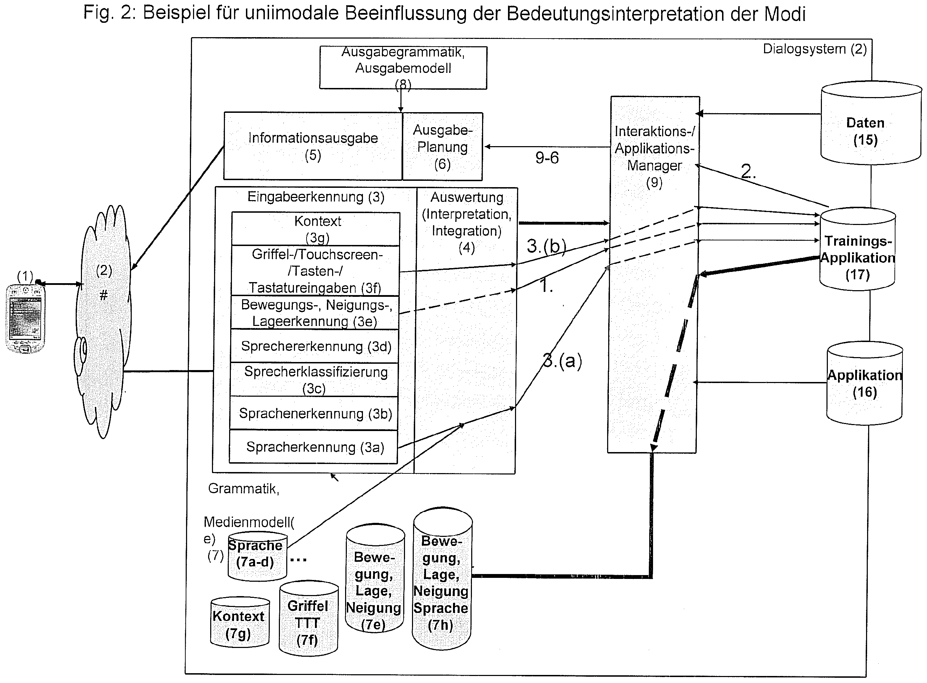

Die Figur 2 zeigt eine Form des Trainings. Kann während der Bereitschaft des Systems zur Informationseingabe (z. B. zur Bestätigung) für eine durch den Nutzer mit dem Endgerät durchgeführte Eingabe in mindestens einem von mehreren möglichen Modi (z. B. eine Bewegung/Geste) kein definiertes Eingabemodell (z. B. Bewegungsmodell) in 7e gefunden werden (1.) oder unterschreitet die Ähnlichkeit zwischen dem eingegebenen und einem vorhandenen Bewegungsmuster einen vorgegebenen Grenzwert, so wird durch eine entsprechend aktive Dialoganwendung für das Training 17 und/oder einen Teil einer anderen Dialoganwendung in 16 der Nutzer 1 veranlasst, über Sprache 3a und/oder über einen beliebiges anderes Medium (z. B. 3f) die Bedeutung der Bewegung zu definieren (2.), (9-6). Dazu wird der Nutzer durch entsprechende Ausgaben der Trainingsapplikation 17 (9-6) aufgefordert, jeweils zu den erwarteten Bedeutungen der im aktuellen Dialogschritt möglichen Eingaben jeweils die entsprechenden Bewegungen auszuführen. Dem einzelnen Bewegungsmuster wird jeweils die dem Nutzer anhand des Sprachmodells vorgeschlagene Bedeutung (z. B. Ablehnung/Zustimmung) zugeordnet.
Bei einer anderen Form des expliziten Trainings werden dem Nutzer in einer separaten Trainingsapplikation sämtliche in anderen Eingabemodellen enthaltene Bedeutungen möglicher Eingaben für eine oder mehrere Anwendungen ausgegeben, für die er aufgefordert wird, mit dem Endgerät entsprechende Bewegungen auszuführen.

Beim implizierten Training ist der Ablauf etwas anders. Kann während der Bereitschaft des Systems zur Informationseingabe (z. B. zur Bestätigung) für eine durch den Nutzer mit dem Endgerät durchgeführte Bewegung kein definiertes Bewegungsmodell in 7e gefunden werden (1.) oder unterschreitet die Ähnlichkeit zwischen dem eingegebenen und einem vorhandenen Bewegungsmuster einen vorgegebenen Grenzwert, so wird durch eine entsprechend aktive Dialoganwendung für das Training 17 und/oder ein Teil einer anderen Dialoganwendung in 16 der Nutzer 1 aufgefordert, über Sprache 3a und/oder über einen beliebiges anderes Medium (z. B. 3f) für das in entsprechenden Eingabemodellen schon Bedeutungen zugeordnet worden waren, die Antwort einzugeben (2.), (9-6). Erkennt das System nun eine sprachliche Äußerung zur ursprünglichen Systemausgabe (z. B. "Ja"), der für das gegebene Beispiel die Bedeutung "Zustimmung" zugeordnet ist, so wird auch im Eingabemodell 7e dem eingegebenen Bewegungsmuster die gleiche Bedeutung zugeordnet, wobei der Nutzer über die Informationsausgabe einen Hinweis erhalten kann, dass seiner letzten Bewegung die genannte Bedeutung zugeordnet worden ist.

Bei den beiden oben aufgeführten Lösungen wird jeweils jeder definierten Eingabefolge in einem Eingabemodell separat eine Bedeutung zugewiesen, d.h. für jeden Eingabemodus kann separat anhand einer im entsprechenden Eingabemodell definierten Bedienhandlung unabhängig von anderen Eingabemodi eine entsprechende Bedeutung zugewiesen werden. Nun kann zur Erhöhung der Erkennungssicherheit eine Nutzerreaktion erst als sicher erkannt gewertet werden, wenn entsprechend gesetzte Schwellwerte für die Erkennung der Nutzerreaktionen von mindestens zwei Eingabemedien überschritten worden sind und die interpretierten Bedeutungen (z. B. Zustimmung oder Ablehnung) übereinstimmen.

Bei Verfahren, in denen die Bedeutungen der Eingabefolgen in den einzelnen Eingabemodi unabhängig voneinander ermittelt werden, hat ein möglicher synchroner Ablauf bestimmter Eingabefolgen in unterschiedlichen Modi nur eine untergeordnete Bedeutung.

Eine andere Möglichkeit zur weiteren Verbesserung der Sicherheit der Erkennung der Bedeutung von Eingabefolgen eines Nutzers besteht in der synchronen Auswertung kombinierter Merkmalsvektoren und/oder Eingabemodelle verschiedener Eingabemodi.

Beim Training kombinierter Merkmalsvektoren und/oder Eingabemodelle können resultierende zeitdiskrete Vektorfolgen auf der Grundlage der Vektorfolgen für die Bedienhandlung eines Eingabemodus zeitdiskret durch die Daten des zusätzlich trainierten Modus ergänzt werden. Dementsprechend können zur Erkennung der Bedeutung synchroner Bedienhandlungen für mindestens zwei definierte Eingabemodi gemeinsame Vektorfolgen und entsprechende Referenzmuster zur Auswertung gelangen.

Beim Training kombinierter Referenzmuster wird die Zuweisung einer Bedeutung zu einem Referenzmuster bei gleichzeitigen Eingaben in mehreren Modi betrachtet.

Als Beispiel wird im folgenden der Dialogablauf zur Ergänzung eines vorhandenen Sprachmodells mit der Bedeutung "Zustimmung" durch mindestens eine synchrone Bedienhandlung betrachtet bei der über Beschleunigungs- und/oder Neigungssensoren und/oder Kamerasignalen die Bewegung eines Endgerätes durch den Nutzer ausgewertet wird. Das durch das Training ergänzte, kombinierte multimodale Referenzmodell erlaubt eine höhere Zuverlässigkeit bei der Erkennung der Bedeutung von Bedienhandlungen. Wird nun eine Zustimmung des Nutzers zu einer Systemausgabe zusätzlich zur Spracheingabe mit einer durch den Nutzer gewählten und trainierten Bewegung des Endgerätes unterstrichen, so kann dem Ergebnis eine höhere Zuverlässigkeit zugewiesen werden, als bei Eingabe allein über Sprache. Im Folgenden wird für die Spracheingabe davon ausgegangen, dass die Bedeutungen der in den Sprachmodellen beschriebenen Spracheingaben schon administrativ oder über ein vorheriges Training definiert worden sind. Dabei können gleichen Eingaben anhängig vom Anwendungskontext auch unterschiedliche Bedeutungen zugewiesen werden.
Beim expliziten Training ist hier der Verfahrensablauf wie folgt. Ähnlich wie oben beschrieben, wird der Nutzer in einer speziellen Trainingsapplikation ggf. jeweils mehrfach aufgefordert für jede in seiner Bedeutung im initialen Sprachmodell definierte Eingabefolge, diese Äußerungen unter gleichzeitiger Durchführung der entsprechenden unterstützende Bewegungen einzugeben.
Aus den erfassten Bewegungsmustern wird dabei nicht, wie oben beschrieben, ein separates Bewegungsmodell abgeleitet, welches für sich allein bei kombinierter Eingabe einen zweiten Bedeutungswert generiert, sondern aus existierendem Sprachmodell und der erfassten digitalisierten Bewegungsfolge im Speicher ein gemeinsames Eingabemodell ermittelt. Dazu können z. B. auf unterer Ebene akustische Modelle um erfasste Bewegungsmerkmale oder auf höheren Ebene Sprachmodelle mit der erfassten Neigungs- und Bewegungsbahn ergänzt werden. Diese Vorgänge können für einzelne Bedeutungen auch wiederholt werden, um statistisch relevante Modelle zu berechnen.

Nach erfolgreichem Training liegt ein kombiniertes multimodales Eingabemodell mit der entsprechend zugeordneten Bedeutung vor. Eine hohe Zuverlässigkeit für die Bedeutung einer erkannten Eingabe wird nun erreicht, wenn sowohl Spracheingabe als auch Bewegung mit dem im multimodalen Eingabemodell definierten Eingaben näherungsweise übereinstimmen. Eine unimodale Eingabe mit der vom Nutzer gewünschten Bedeutung bedeutet dabei nicht zwangsläufig eine Fehleingabe, sondern kann dem System auch die gewünschte Bedeutung allerdings mit einem geringeren Zuverlässigkeitswert liefern.

Für das implizite Training kombinierter multimodaler Eingabemodelle wird ebenfalls vorausgesetzt, dass für einen primären Eingabemodus die Bedeutungen bestimmter Bedienhandlungen im entsprechenden Eingabemodell definiert sind. Im folgenden Beispiel wird die Spracheingabe als primärer Eingabemodus betrachtet. Als primäre Eingabemodi mit vordefinierten Modellen sind ebenfalls Bewegungs-, Tastatur-, Griffeleingabe, Eingaben unter Nutzung einer Kamera und andere Modi vorstellbar, mit deren Hilfe z. B. dann die Bedeutungen von Spracheingaben definiert werden können. Dabei kann in einer Applikation je nach vorhandener Bedeutungsdefinition von Eingaben im Eingabemodell für verschiedene Dialogschritte auch ein unterschiedlicher Primärmodus definiert sein.

Für das implizite Training kombinierter Eingabemodelle können vorhandene Applikationen im Primärmodus bedient werden. Im folgenden Beispiel dient wieder die Spracheingabe als Primärmodus und die Erfassung von Endgerätebewegungen als Sekundärmodus.

Bedient der Nutzer eine vorhandene Applikation über den Primärmodus Sprache, so werden gleichzeitig im Hintergrund Neigungs- und Bewegungsbahnen des Endgerätes erfasst und den unter explizitem Training beschrieben multimodalen Eingabemodellen hinzugefügt. Mit größerer Häufigkeit der Nutzung einer bestimmten Applikation und häufiger Übereinstimmung der Eingabemuster der Bewegungen (Sekundärmodus) für gleiche Bedeutungseingaben erhalten die Bewegungsteile der Referenzmuster bei der Auswertung der Eingaben ein größeres Gewicht. Auf diese Weise kann das multimodale Eingabemodell auch auf Bewegungseingaben im Sekundärmodus trainiert und laufend adaptiert werden.

Die Bestimmung der Bedeutung von Eingaben allein ist nur ein Teilaspekt der Interpretation von Bewegungseingaben.

Nutzereingaben während eines Diskurses oder Dialoges mit einem System enthalten nicht nur inhaltliche Informationen, die gemäß der definierten Bedeutung semantisch interpretiert werden können, sondern auch Informationen pragmatischer Art über den Typ der Eingaben, wie z. B. ob der Nutzer eine Frage zur Klärung stellt, oder einfach nur einen Ausgabeprompt beantwortet. Die Erfassung der Art der Eingabe kann zusätzlich über die Bewegung des mobilen Endgerätes erfolgen.

Da nach einem erfolgreichen Dialogschritt in einem geführten Dialog bei Eingabe einer Information des Nutzers über den Primärmodus der Typ der Eingabe als bekannt vorausgesetzt werden kann, kann die aufgezeichnete Bewegung neben bedeutungstragenden auch pragmatische Informationen enthalten, die den Typ der Eingabe widerspiegeln. Hierbei kann administrativ festgelegt worden sein, ob für einen bestimmten Eingabetyp einer Eingabe oder eines Teils einer Eingabe überhaupt inhaltliche Informationen für einen Sekundärmodus (z. B. Eingaben über die Bewegung des Endgerätes) möglich und/oder zugelassen sind, so dass im negativen Fall einzig die Ermittlung des Eingabetyps über den Sekundärmodus möglich ist. Durch Hinzufügen des ermittelten Eingabetyps in Kombination mit dem ermittelten Eingabemodell für den Sekundärmodus zum Gesamteingabemodell nach einer erfolgreichen Eingabe im Primärmodus während des impliziten Trainings liegen danach im Eingabemodell zusätzliche Informationen vor, die die Einbeziehung des Eingabetyps in die Auswahl von Teilmodellen und/oder Teilgrammatiken für den Primärmodus begünstigen. In Fällen, in denen die Auswahl des passenden Teilmodells bzw. Teilgrammatik bei entsprechenden Nutzereingaben während des Diskurses/Dialoges mit dem System unsicher ist, stellt die Auswertung des Eingabetyps Über einen Sekundärmodus (z. B. Bewegungseingaben) somit ein zusätzliches Kriterium dar, welches die automatische Erkennung von Eingaben im Primärmodus (z. B. Spracheingaben) erleichtert.

Die bevorzugten Ausführungsformen dienen nicht der Beschränkung der vorliegenden Erfindung. Sie haben lediglich den Zweck des besseren Verständnisses. Der Schutzumfang bemisst sich maßgeblich durch die folgenden Ansprüche.

### Bezugszeichenliste

- 1: Endgerät
- 2a: Daten-, Sprach- und/oder Übertragungsnetz für multimodale Ein- und Ausgaben
- 2: Dialogsystem
- 3: Eingabeerkennung
- 3a: Spracherkennung, Erkennung von DTMF-Tönen
- 3b: Sprachenerkennung (language identifikation, language detection)
- 3c: Sprachklassifizierung (Sprachbasierte Klassifizierung)
- 3d: Sprechererkennung (Sprecherverifizierung und/oder Sprecheridentifizierung)
- 3e: Emotionserkennung
- 3f: Ermittlung der Anschluss-/Endgerätekennung
- 3g: Erkennung anderer multimodaler Eingaben (Griffel, Tastatur, Kamera, Touchscreen, ...)
- 4: Auswertungs-/Interpretationsmodul
- 5: Informationsausgabe (aufgezeichnete Sprache, Sprachsynthese, Displayanzeigen, Audiosignale, Gerätevibration)
- 6: Ausgabeplanung
- 7: Eingabemodelle
- 8: Ausgabegrammatik, Ausgabemodell
- 9: Interaktions-/Applikationsmanagement
- 15: Anwendungsdaten
- 16: Dialoganwendung (ggf. inkl. Trainingsapplikation und/oder Teilen davon)
- 17: Trainingsapplikation

### Begriffsdefinitionen

- CLI: Calling Line Identification
- Grammatik: Strukturierte Beschreibung möglicher auszuwertender Eingaben durch den Nutzer (z. B. gesprochene Sprache, Texteingaben, Griffel, Gesichtsmimik usw.) und/oder das System (z. B. Textzeichenfolgen in Dokumenten, aufgezeichnete Sprache, Multimediadateien); Form eines Eingabemodells/Medienmodells
- HLR: Home Location Register
- Kontext: Umgebungsdaten für eine oder mehrere Anwendungen, wie z. B. Ort, Zeit, Nutzerpräferenzen, Gesundheitszustand, Terminkalender, Temperatur , Luftfeuchtigkeit, Endgeräteeigenschaften, nahe Endgeräte anderer Nutzer u.a.
- Eingabemodell, Medienmodell: Beschreibt die Reihenfolge, in der Eingaben (z. B. Wörter, Bewegungsmuster) vom Medienerkenner (z. B. Spracherkenner, Lage-/Bewegungserkenner) erwartet werden (z. B. Sprachmodell, Bewegungsmodell).
- Unimodale Interaktion: Kommunikation mit einem System über einen Modus (z. B. nur Sprache, nur Tastatur, nur Maus usw.)
- Multimodale Interaktion: Kommunikation mit einem System über mehrere Modi (z. B. Sprache und Griffel)
- Initialgrammatik: Erster, nicht adaptierter Entwurf einer Grammatik
- Nutzungshaufigkei t: Anzahl von Nutzungsvorgängen innerhalb eines bestimmten Zeitraumes, im allg. gleich einer Zählgeschwindigkeit, falls nicht gemittelt.
- (Sprach-)Prompt: Sprachausgabe von Informationen
- Sprache: Kommunikationssystem, das der Verständigung mittels eines Systems von Symbolen dient
- Sprecherklassi fizierung: Bestimmung der Zugehörigkeit mindestens eines Sprechers zu einer größeren Sprechergruppe anhand von Merkmalen der Stimme.
- Sprechererkennung: Authentifizierung oder Identifizierung eines Sprechers anhand von Merkmalen der Stimme
- Zuverlässigkei tswert, Score: Zahlenwert, der die Sicherheit bzw. Zuverlässigkeit von Ergebnisdaten widerspiegelt

## Patentansprüche

1. Verfahren zur Benutzer-individuellen Definition der Interpretation von Eingaben in ein multimodales, mehrere Eingabegeräte umfassendes, Dialogsystem eines Telekommunikationsendgerätes umfassend eine Datenbank in der Eingabemodelle für mindestens einen Eingabemodus oder mindestens ein Eingabegerät oder Eingabemodelle für eine Kombination von Eingabemodi und/oder Eingabegeräten abgelegt sind, mit folgenden Schritten:
- Falls eine Eingabe von einer Anwendung erwartet wird, die auf dem Telekommunikationsendgerät läuft, Durchführen eines Zuordnungsversuches der Eingabe zu einem oder mehreren Eingabemodellen für einen ersten Eingabemodus, und
- falls kein Eingabemodell gefunden wird oder eine ausreichend sichere Zuordnung zu einem Eingabemodell nicht erfolgen kann, erfolgt ein Umschalten auf einen alternativen Eingabemodus und/oder ein alternatives Eingabegerät, dessen Eingabemodell ausreichend definiert ist, und es erfolgt ein Auffordern des Benutzers zur erneuten Eingabe im alternativen Eingabemodus und/oder in das alternative Eingabegerät, wobei die erneute Eingabe über den alternativen Eingabemodus und/oder das alternative Eingabegerät die ursprüngliche Eingabe ersetzt und die Bedeutung der Eingabe anhand dessen Eingabemodells bestimmt wird, um diese Bedeutung an die Anwendung weiterzuleiten, wobei der ursprünglichen Eingabe, die gepuffert wurde, die so bestimmte Bedeutung zugeordnet wird, um diese dann im Eingabemodell für den ersten Eingabemodus zu speichern, und wobei in einem interaktiven Dialog eine Abfrage erfolgt, ob die Eingabe im Eingabemodell für den ersten Eingabemodus gespeichert werden soll.

2. Das Verfahren nach Anspruch 1, wobei bei einem expliziten Training der Benutzer vorzugsweise mehrfach aufgefordert wird, die Eingabe zu einer Bedeutung eines vorliegenden Eingabemodells vorzunehmen, wobei die Bestätigung durch einen alternativen Eingabemodus und/oder ein alternatives Eingabegerät, dessen Eingabemodell ausreichend definiert ist, erfolgt, und wobei es sich beim vorliegenden Eingabemodell vorzugsweise um ein Sprachmodell handelt.

3. Das Verfahren nach einem oder mehreren der vorhergehenden Ansprüche, wobei die Eingabemodelle anwendungsspezifisch sind, so dass die gleiche Eingabe bei unterschiedlichen Anwendungen eine unterschiedliche Bedeutung hat.

4. Das Verfahren nach einem oder mehreren der vorhergehenden Ansprüche, wobei bei bestimmten Eingabemodellen Kombinationen von Eingaben in unterschiedlichen Eingabemodi und/oder auf unterschiedlichen Geräten zugelassen sind, und wobei vorzugsweise parallele Eingaben zulässig sind.

5. Das Verfahren nach einem oder mehreren der vorhergehenden zwei Ansprüche, wobei Eingabefolgen zulässig sind, die durch Vektordefinitionen synchronisiert sind, und die vorzugsweise zeitdiskret sind.

6. Das Verfahren nach einem oder mehreren der vorhergehenden Ansprüche, wobei eines oder mehrere der folgenden Eingabegeräte verwendet werden: Kontexterkenner ; Griffel,-Touchscreen-, Tasten-, Tastatureingabe; Bewegungs-, Neigungs-, Lageerkennung; Sprechererkennung; Sprecherklassifizierung; Spracherkennung.

7. Telekommunikationsendgerät zur Benutzer-individuellen Definition der Interpretation von Eingaben in ein multimodales, ein oder mehrere Eingabegeräte umfassendes, Dialogsystem, umfassend einen Datenspeicher mit einer Datenbank in der Eingabemodelle für ein Eingabegeräte oder Eingabemodelle für eine Kombination von Eingabegeräten abgelegt sind, mit einer Einrichtung und Kombination von Mitteln so dass:
- Falls eine Eingabe von einer Anwendung erwartet wird, die auf dem Telekommunikationsendgerät läuft, Durchführen eines Zuordnungsversuches der Eingabe zu einem oder mehreren Eingabemodellen für einen ersten Eingabemodus, und
- falls kein Eingabemodell gefunden wird oder eine ausreichend sichere Zuordnung zu einem Eingabemodell nicht erfolgen kann, umschalten auf einen alternativen Eingabemodus und/oder ein alternatives Eingabegerät dessen Eingabemodell ausreichend definiert ist und Auffordern des Benutzers zur erneuten Eingabe im alternativen Eingabemodus und/oder in das alternative Eingabegerät,
wobei Mittel vorhanden sind, so dass die erneute Eingabe über den alternativen Eingabemodus und/oder das alternative Eingabegerät die ursprüngliche Eingabe ersetzt und die Bedeutung der Eingabe anhand dessen Eingabemodells bestimmt wird, um diese Bedeutung an die Anwendung weiterzuleiten, wobei der ursprünglichen Eingabe, die gepuffert wurde, die so bestimmte Bedeutung zugeordnet wird, um diese dann als ein Eingabemodell für den ersten Eingabemodus zu speichern und wobei Mittel vorhanden sind, so dass in einem interaktiven Dialog eine Abfrage erfolgt, ob die Eingabe im Eingabemodell für den ersten Eingabemodus gespeichert werden soll.

8. Das Telekommunikationsendgerät nach Anspruch 7, wobei Mittel vorhanden sind, so dass bei einem expliziten Training der Benutzer vorzugsweise mehrfach aufgefordert wird, die Eingabe zu einer Bedeutung eines vorhandenen Eingabemodells vorzunehmen, wobei die Bestätigung durch einen alternativen Eingabemodus und/oder das alternative Eingabegerät, dessen Eingabemodell ausreichend definiert ist, erfolgt und wobei das vorhandene Eingabemodell vorzugsweise ein Sprachmodell darstellt.

9. Das Telekommunikationsendgerät nach einem oder mehreren der vorhergehenden Telekommunikationsendgeräteansprüche, wobei Mittel vorhanden sind, so dass die Eingabemodelle anwendungsspezifisch sind, so dass die gleiche Eingabe bei unterschiedlichen Anwendungen eine unterschiedliche Bedeutung hat.

10. Das Telekommunikationsendgerät nach einem oder mehreren der vorhergehenden Telekommunikationsendgeräteansprüche, wobei Mittel vorhanden sind, so dass bei bestimmten Eingabemodellen Kombinationen von Eingaben in unterschiedlichen Modi und/oder auf unterschiedlichen Geräten zugelassen sind und wobei vorzugsweise Mittel vorhanden sind, so dass parallele Eingaben zulässig sind.

11. Das Telekommunikationsendgerätes nach einem oder mehreren der vorhergehenden zwei Ansprüche, wobei Mittel vorhanden sind, so dass Eingabefolgen zulässig sind.

12. Das Telekommunikationsendgerätes nach dem vorhergehenden Anspruch, wobei Mittel vorhanden sind, so dass die Eingabefolgen durch Vektordefinitionen definiert und synchronisiert sind und wobei vorzugsweise Mittel vorhanden sind, so dass die Eingabefolge zeitdiskret ist.

13. Das Telekommunikationsendgerätes nach einem oder mehreren der vorhergehenden Telekommunikationsendgeräteansprüche, wobei eines oder mehrere der folgenden Eingabegeräte verwendet werden: Kontexterkenner ; Griffel,-Touchscreen-, Tasten-, Tastatureingabe; Bewegungs-, Neigungs-, Lageerkennung; Sprechererkennung; Sprecherklassifizierung; Spracherkennung.

## Claims

1. A method for the user-specific definition of the interpretation of inputs into a multimodal dialogue system comprising a plurality of input devices of a telecommunications terminal comprising a database in which input models for at least one input mode, or at least one input device, or input models for a combination of input modes and / or input devices are stored, Comprising the following steps:
- If an input is expected from an application running on the telecommunication terminal, performing an allocation attempt of the input to one or more input models for a first input mode, and
- if no input model is found or if a sufficiently secure assignment to an input model cannot be carried out, switching to an alternative input mode and / or an alternative input device whose input model is sufficiently defined, and prompting the user to reenter the alternative Input mode and / or into the alternative input device, the re-input replacing the original input via the alternative input mode and / or the alternative input device and the meaning of the input being determined by its input model, to forward the meaning to the application, wherein the original input, is allocated the meaning so determined, in order to store this in the input model for the first input mode, and wherein, in an interactive dialog, a query is made as to whether the input is to be stored in the input model for the first input mode.

2. The method as claimed in claim 1, wherein, in the case of an explicit training, the user is preferably requested several times to make the input to a meaning of a given input model, wherein the confirmation by an alternative input mode and / or an alternative input device whose input model is sufficiently defined, and wherein the present input model is preferably a speech model.

3. The method as claimed in one or more of the preceding claims, wherein the input models are application-specific so that the same input has a different meaning in different applications.

4. The method as claimed in one or more of the preceding claims, wherein in certain input models combinations of inputs are permitted in different input modes and / or on different devices, and preferably parallel inputs are permissible.

5. The method as claimed in one or more of the preceding two claims, wherein input sequences are allowed which are synchronized by vector definitions and which are preferably time-discrete.

6. The method as claimed in one or more of the preceding claims, wherein one or more of the following input devices are used: context recognizer; Stylus, touch screen, key, keyboard input; Movement-, inclination-, position detection; Speaker recognition; Spokesman classification; Voice recognition.

7. A telecommunication terminal for the user-specific definition of the interpretation of inputs into a multimodal dialog system comprising one or more input devices, comprising a data store having a database in which the input models for an input device or input models for a combination of input devices are stored, comprising a configuration and combination of means such that:
- If an input is expected from an application running on the telecommunication terminal, performing an allocation attempt of the input to one or more input models for a first input mode, and
- if no input model is found or if a sufficiently secure assignment to an input model can not be performed, switch to an alternative input mode and / or an alternative input device whose input model is sufficiently defined and prompting the user to reenter in the alternative input mode and / or into the alternative input device,
Wherein means are used so that the re-input via the alternative input mode and/or the alternative input device overwrites the original input, and the meaning of the input is determined by its input model, to forward this meaning to the application, the original input, which is buffering, is assigned thus meaning, so as to store it as an input model for the first input mode and wherein means are present so that an inquiry is made in an interactive dialog whether the input is to be stored in the input model for the first input mode.

8. The telecommunication terminal as claimed in claim 7, wherein means are present, such that, in an explicit training, the user is preferably requested several times to make the input to a meaning of an existing input model, wherein the confirmation is done by an alternative input mode and / or the alternative input device, whose input model is sufficiently defined, and wherein the existing input model preferably represents a language model.

9. The telecommunication terminal according to one or more of the preceding telecommunication terminal claims, wherein means are present so that the input models are application-specific so that the same input has a different meaning in different applications.

10. The telecommunication terminal according to one or more of the preceding telecommunications terminal claims, wherein means are present such that, in certain input models, combinations of inputs are allowed in different modes and / or on different devices, and preferably means are present so that parallel inputs are permissible.

11. The telecommunication terminal according to one or more of the preceding two claims, wherein means are present, so that input sequences are permissible.

12. The telecommunication terminal according to the preceding claim, wherein means are present such that the input sequences are defined and synchronized by vector definitions and preferably means are present so that the input sequence is time-discrete.

13. The telecommunication terminal according to one or more of the preceding telecommunications terminal claims, using one or more of the following input devices: context recognizer; Stylus, touch screen, key-, keyboard input; Movement-, inclination-, position detection; Speaker recognition; Spokesman classification; Voice recognition.

## Revendications

1. Un procédé d'interprétation de saisie, définie spécifiquement pour un utilisateur, au sein d'un système de dialogue multimodal, comprenant une pluralité de dispositifs de saisie d'un terminal de télécommunication comprenant une base de données dans laquelle sont stockés des modèles de saisie pour au moins un mode de saisie, ou au moins un dispositif de saisie, ou des modèles de saisie pour une combinaison de modes de saisie et/ou des dispositifs de saisie, comprenant les étapes suivantes :
- si une saisie est attendue par une application en cours d'exécution sur le terminal de télécommunication, effectuer une tentative d'allocation de la saisie pour un ou plusieurs de modèles de saisie pour un premier mode de saisie ;
- si aucun modèle de saisie n'est trouvé ou dans le cas où aucune affectation suffisamment fiable ne peut être effectuée avec un modèle de saisie, commuter à un mode de saisie alternative et/ou un dispositif de saisie alternative dont le modèle de saisie est suffisamment défini, et inviter l'utilisateur à saisir un mode de saisie alternatif et/ou un dispositif de saisie alternatif, la nouvelle saisie remplaçant la saisie originelle via un mode de saisie alternatif et/ou le dispositif de saisie alternatif et la signification de la saisie étant déterminée par son modèle de saisie, pour transmettre la signification à l'application, dans lequel la saisie originelle est affectée à la signification ainsi faite, afin de stocker celle-ci dans le modèle de saisie pour le premier mode d'entrée, et dans lequel, au sein d'un dialogue interactif, une requête est réalisée pour savoir si la saisie doit être stockée dans le modèle de saisie pour le premier mode de saisie.

2. Le procédé tel que revendiqué dans la revendication 1, dans lequel, dans le cas d'un apprentissage explicite, l'utilisateur est de préférence requis plusieurs fois pour entrer la saisie, en vue d'une interprétation par un modèle de saisie donné, dans lequel la confirmation par un mode de saisie alternatif et/ou un dispositif de saisie alternatif dont le modèle de saisie est suffisamment défini, et dans lequel le modèle de saisie présent est de préférence un modèle vocal.

3. Le procédé tel que revendiqué dans l'une ou plusieurs des revendications précédentes, dans lequel les modèles de saisie sont spécifiques à l'application, de sorte que la même saisie présente une signification différente dans des applications différentes.

4. Le procédé tel que revendiqué dans la revendication l'une ou plusieurs des revendications précédentes, dans lequel dans certains modes de saisie, des combinaisons de saisies sont permises dans différent modes de saisie distinct et/ou différents dispositifs, et de préférence des saisies parallèles sont permises.

5. Le procédé tel que revendiqué dans la revendication l'une ou plusieurs des revendications précédentes, dans lequel des séquences de saisie sont autorisées, qui sont synchronisées par des définitions de vecteurs et qui sont, de préférence, en temps discret.

6. Le procédé tel que revendiqué dans la revendication une ou plusieurs des revendications précédentes, dans lequel une ou plusieurs dispositifs de saisie suivants sont utilisés: interpréteur de contexte ; Stylus, écran tactile, boutons, clavier; détection de mouvement, détection d'inclinaison, détection de position ; reconnaissance du porte-parole ; classification du porte-parole ; reconnaissance vocale.

7. Un terminal de télécommunication pour une interprétation de saisie définie spécifiquement pour un utilisateur, au sein d'un système de dialogue multimodal, comprenant un ou plusieurs dispositifs de saisie, comprenant un stockage de données dotée d'une base de données dans laquelle sont stockées les modèles de saisie pour un dispositif de saisie, ou des modèles de saisie pour une combinaison de dispositifs de saisie, comprenant une configuration et une combinaison de moyens pour :
- si une saisie est attendue par une application en cours d'exécution sur le terminal de télécommunication, effectuer une tentative d'allocation de la saisie pour un ou plusieurs de modèles de saisie pour un premier mode de saisie, et
- si aucun modèle de saisie n'est trouvé ou dans le cas où aucune affectation suffisamment fiable ne peut être effectuée avec un modèle de saisie, commuter à un mode de saisie alternatif et/ou un dispositif de saisie alternative dont le modèle de saisie est suffisamment défini, et inviter l'utilisateur à saisir un mode de saisie alternatif et/ou un dispositif de saisie alternatif,
dans lequel des moyens sont utilisés pour que la nouvelle saisie via le mode de saisie alternatif et/ou le dispositif de saisie alternatif ré-écrive la saisie originelle, et la signification de la saisie est déterminée par son modèle de saisie, pour transmettre cette signification à l'application, la saisie originelle, qui est stockée en tampon, est affectée de telle sorte que cette signification soit stockée en un modèle de saisie pour le premier mode de saisie et dans lequel des moyens sont présent de telle façon qu'une requête est effectuée dans un dialogue interactive pour déterminer si la saisie doit être stockée dans le modèle de saisie pour le premier mode de saisie.

8. Le terminal de télécommunication tel que revendiqué dans la revendication 7, dans lequel des moyens sont prévus de telle sorte que, lors d'un apprentissage explicite, l'utilisateur est de préférence requis à plusieurs reprises pour donner à une saisie une signification d'une modèle de saisie existant, dans lequel la confirmation est faite par un mode de saisie alternative et/ou un dispositif de saisie alternative, dont le modèle d'entrée est suffisamment défini, et dans lequel le modèle de saisie existant représente de préférence un modèle de langage.

9. Le terminal de télécommunication selon une ou plusieurs des revendications précédentes de terminal de télécommunication, dans lequel des moyens sont prévus de sorte que les modèles de saisie sont spécifiques à l'application, de sorte que la même saisie présente une signification différente dans des applications différentes.

10. Le terminal de télécommunication selon une ou plusieurs des revendications précédentes de terminal de télécommunication, dans lequel des moyens sont prévus de sorte que, dans certains modèles de saisie, des combinaisons d'entrées sont permises dans différents modes et/ou sur différents dispositifs, et de préférence des moyens sont prévus pour permettre des entrées parallèles.

11. Le terminal de télécommunication selon l'une ou plusieurs des deux revendications précédentes, dans lequel des moyens sont prévus de telle sorte que les séquences d'entrée sont autorisés.

12. Le terminal de télécommunication selon la revendication précédente, dans lequel des moyens sont prévus de sorte que les séquences de saisies soient définis et synchronisées par des définitions de vecteurs, et de préférence des moyens sont prévus pour que la séquence de saisie soit temporellement discrète.

13. Le terminal de télécommunication selon une ou plusieurs des revendications précédentes de terminal de télécommunication, utilisant un ou plusieurs des dispositifs de saisis suivants : interpréteur de contexte ; Stylus, écran tactile, boutons, clavier; détection de mouvement, détection d'inclinaison, détection de position ; reconnaissance du parolier ; classification du parolier ; reconnaissance vocale.
